# EUROPÄISCHE PATENTSCHRIFT

(11) **EP 2 928 110 B1**
(45) Veröffentlichungstag und Bekanntmachung des Hinweises auf die Patenterteilung: **07.10.2020**
(21) Anmeldenummer: 14163047.5
(22) Anmeldetag: 01.04.2014
(51) Int. Cl.: H04L 7/00, G05B 19/00

(54) **Verfahren zur Synchronisation eines isochronen Systems mit einem übergeordneten Taktsystem**
Method for synchronising an isochronous system with a higher level clock system
Procédé de synchronisation d'un système isochrone doté d'un système d'horloge maître

(43) Veröffentlichungstag der Anmeldung: 07.10.2015
(73) Patentinhaber: Siemens Aktiengesellschaft, 80333 München (DE)
(72) Erfinder: Gross, Markus, 90762 Fürth (DE); Käsdorf, Oswald, 91091 Grossenseebach (DE); Schleußinger, Armin, 96135 Stegaurach (DE); von der Bank, Michael, 90617 Puschendorf (DE)

(56) Entgegenhaltungen:
- EP-A2- 0 840 471
- WO-A1-98/45973
- DE-A1- 4 215 380
- US-A- 4 694 472
- US-A1- 2006 056 560
- US-A1- 2011 276 820

## Beschreibung

Die Erfindung betrifft ein Verfahren zur Synchronisation eines isochronen Systems mit einem bisher unabhängigen, topologisch übergeordneten Taktsystem. Zur Unterscheidung vom dem übergeordneten Taktsystem wird das Taktsystem des isochronen Systems, das mit dem übergeordneten Taktsystem verbunden werden soll, im Folgenden als isochrones Basistaktsystem oder kurz als Basistaktsystem bezeichnet.

Synchronisationsverfahren sind im Stand der Technik in vielfältigster Art bekannt. Beispiele finden sich im Folgenden:
Gemäß der WO 98/45973 A sind an ein in einem Netzwerk als Switch fungierendes Gerät weitere Geräte angeschlossen, wobei der Switch mit einem Grundtakt versorgt wird und eine Phasendifferenz lokaler Takte solcher weiteren Geräte zu dem Grundtakt ausgeregelt werden soll, indem der Switch an die lokalen Geräte einen Bitstrom sendet, deren Flanken repräsentativ für die Phasenlage des Grundtakts sind, die damit auch in jedem angeschlossenen weiteren Gerät bekannt wird.

Aus der EP 0 840 471 A2 ist ein Verfahren zur Vorgabe einer gemeinsamen Frequenz an eine Vielzahl von Basisstationen über eine Mobilfunkverbindung bekannt. Dazu wird ein über die Mobilfunkverbindung transferierbarer Zahlenwert ermittelt und jede Basisstation stimmt ihren lokalen Taktgenerator auf die als Zahlenwert übermittelte gemeinsame Frequenz ab. Aus der US 2011/0276820 A1 ist ein Verfahren bekannt, bei dem auf Basis eines Precision Time Protocol (PTP) in einem Netzwerk ein Triggersignal an eine Vielzahl von daran angeschlossenen Geräten verteilt wird, so dass diese anhand des Trägersignals eine Synchronisation ihrer lokalen Takte vornehmen können.

Die US 2006/056560 A1 betrifft ein Verfahren und eine Vorrichtung zum Synchronisieren des internen Zustands von Frequenzgeneratoren in einem Kommunikationsnetz. Dabei wird eine erste Steuerebene durch die periodische Übertragung von Steuerwörtern von der Master-Uhr zu den Slave-Uhren erreicht. Um eine verbesserte Steuerung der Ausgabe der Nebenuhren zu ermöglichen, wird die Frequenz des lokalen Oszillators, der zum Erzeugen der synthetisierten Ausgabe der Hauptuhr verwendet wird, auch zu den Nebenuhren übertragen, um zu ermöglichen, dass eine zweite Steuerungsebene stattfindet. Die zweite Steuerebene ermöglicht es den lokalen Oszillatoren bei den Slave-Takten, sich auf die Frequenz des lokalen Master-Oszillators einzustellen, um dadurch zu ermöglichen, dass die lokalen Slave-Oszillatoren unter Verwendung derselben lokalen Oszillatorfrequenz betrieben werden. Zeitstempel werden verwendet, um die lokalen Oszillatoren von Master und Slave zu synchronisieren.

Ein Beispiel für ein Basistaktsystem der eingangs genannten Art, das mehrere grundsätzlich unabhängige Komponenten oder Geräte - im Folgenden zusammenfassend als Komponenten bezeichnet - umfassen kann, ist ein System in Form einer Produktionsmaschine, einer Werkzeugmaschine, eines Roboters oder dergleichen. Ein solches System wird im Folgenden zusammenfassend, aber ohne Verzicht auf eine weitergehende Allgemeingültigkeit als Produktionsmaschine bezeichnet.

In einem derartigen Basistaktsystem werden bekanntlich mehrere Takte mit unterschiedlichen Perioden verwendet, die einerseits sämtlich zwischen den von dem Basistaktsystem umfassten Komponenten synchronisiert werden müssen und die andererseits auch untereinander in einer definierten Phasenbeziehung zueinander stehen müssen.

Dabei werden folgende Konsistenzbedingungen vorausgesetzt:
- Eine als Taktmaster fungierende Komponente gibt an die übrigen von dem Basistaktsystem umfassten Komponenten einen im Folgenden als Kommunikationstakt bezeichneten Takt aus. Die Periode des Kommunikationstakts bestimmt den kürzesten im Basistaktsystem verwendbaren Takt. Alle Komponenten synchronisieren sich mittels eines lokalen Taktgenerators, insbesondere einer lokalen, digitalen PLL (DPLL), auf den Kommunikationstakt und der Beginn der Taktperiode jedes anderen Takts im Basistaktsystem fällt stets mit dem Beginn einer Periode des Kommunikationstakts zusammen.
- Neben dem Kommunikationstakt wird vom Taktmaster ein spezieller Systemtakt erzeugt, bei dem der Beginn jeder Taktperiode mit dem Beginn der Taktperioden aller anderen, untereinander synchronisierten Takte zusammenfällt. Die Periode eines solchen Takts ist das kleinste gemeinsame Vielfache der Perioden aller anderen Takte des Basistaktsystems. Entsprechend wird dieser als KGV-Takt (KGV = kleinstes gemeinsames Vielfaches) bezeichnet.

Auf Basis des von Taktmaster ausgegebenen Kommunikationstakts erzeugt jede von dem Basistaktsystem umfasste Komponente ein eigenständiges Taktsystem, das mithilfe eines lokalen Taktgenerators (lokaler DPLL) und anderer geeigneter Maßnahmen die Konsistenzbedingungen in Bezug auf das Taktsystem des Taktmasters erfüllt. Dabei wird für jede von dem Basistaktsystem umfasste Komponente jede bereits erreichte Konsistenzbedingung - teilweise mithilfe einer DPLL - aufrechterhalten.

Zum Verbinden eines solchen isochronen Basistaktsystems mit einem bisher unabhängigen, topologisch übergeordneten Taktsystem müssen alle Takte des Basistaktsystems phasenverschoben werden, damit sich beide Systeme zu einem isochronen Gesamtsystem vereinen. Die Phasenverschiebung muss dabei so erfolgen, dass einerseits die Konsistenz der Takte untereinander und über die verschiedenen Komponenten des Basistaktsystems hinweg zu keinem Zeitpunkt unzulässig gestört wird und dass andererseits nach der Phasenverschiebung die Vereinigung der Taktsysteme so möglich ist, dass die genannten Konsistenzbedingungen auch für das Gesamtsystem gelten.

Bisher ist bei einem Verfahren zur Synchronisation eines isochronen Systems mit einem übergeordneten Taktsystem vorgesehen, dass die Konsistenzbedingungen aller lokalen Takte innerhalb einer Komponente mittels einer Software-Routine eingestellt und überprüft werden. Dabei wird anhand von Hardware-Zählern die Phasenlage der Takte geprüft und es wird gegebenenfalls eine Phasenverschiebung programmiert, die dann allerdings in Hardware ausgeführt wird. Dies gelingt nur, wenn die Hardware-Zähler der verschiedenen Takte konsistent ausgelesen werden, d.h. wenn sichergestellt ist, dass alle Zähler ausgelesen werden können, bevor sich ein Zählerstand ändert. In einem Echtzeitsystem bedeutet dies, dass diese Software-Routine der schnellsten Zeitscheibe zugeordnet sein muss.

Zwischen verschiedenen Komponenten können die Konsistenzbedingungen nur durch Beobachtung der Kommunikation erfüllt werden, die zu vorher festgelegten Zeitpunkten mit durch ein jeweiliges Protokoll definierten Telegrammen erfolgt. Für eine gezielte Synchronisation müsste der Zeitpunkt, zu dem die oben genannte Software-Routine läuft, nicht nur auf die internen Zähler sondern auch auf die Kommunikation ausgerichtet werden. Zur Vermeidung dieser zusätzlichen Randbedingung werden die Phasen der betroffenen Takte nicht gezielt sondern schrittweise verändert, bis eine fehlerfreie Kommunikation erkennen lässt, dass die Konsistenzbedingung erfüllt ist.

Bei der Verbindung mit einem übergeordneten Taktsystem teilt der Taktmaster des Basistaktsystems zunächst allen Komponenten des Basistaktsystems mit, dass eine Phasenverschiebung erfolgt. Bei dem bisherigen Verfahren verschiebt der Taktmaster dann solange sein eigenes Taktsystem, bis es mit dem übergeordneten Taktsystem synchron ist. Dabei verwendet der Taktmaster eine konstante Schrittweite pro Kommunikationstakt. Schließlich teilt der Taktmaster den anderen Komponenten des Basistaktsystems mit, dass die Phasenverschiebung abgeschlossen ist.

Auf diese Weise ist eine Synchronizität des Taktmasters des Basistaktsystems mit dem übergeordneten Taktsystem erreicht. Während dieser Anpassung und nach der Anpassung gibt der Taktmaster kontinuierlich den für alle Komponenten des Basistaktsystems maßgeblichen Kommunikationstakt aus.

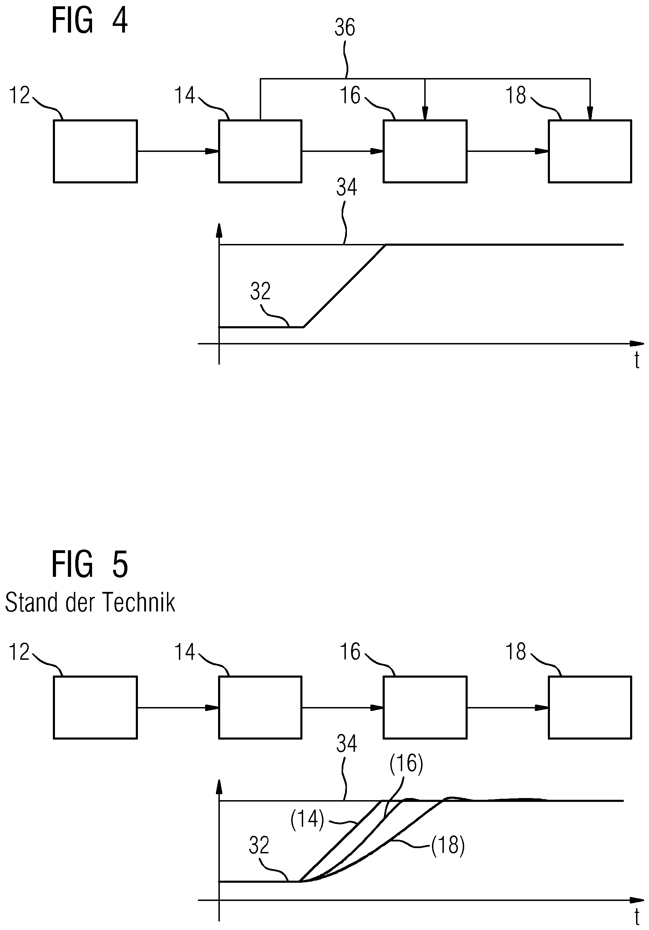

Die DPLL, mit der sich die übrigen Komponenten synchron zum Taktmaster halten, ist aber im Allgemeinen zur Unterdrückung von Störrauschen (Jitter) optimiert. Dadurch kann sie der Schrittweite bei der Phasenverschiebung nicht folgen (siehe FIG 5). Deshalb wird vorübergehend ein anderes Synchronisationsverfahren verwendet, das zwar der Phasenverschiebung folgen, jedoch den Jitter nicht unterdrücken kann. Bei diesem anderen Synchronisationsverfahren erfolgt eine sprunghafte Anpassung der Taktperiode.

Nachteilig bei diesem bekannten Verfahren zur Synchronisation eines isochronen Basistaktsystems mit einem bisher unabhängigen, topologisch übergeordneten Taktsystem ist, dass durch die sprunghafte Änderung der Taktperiode in Addition zu dem verbleibenden Jitter eine fehlerfreie Kommunikation mit dem Taktmaster, zum Beispiel einer Verletzung eines der Komponente zugeordneten Sendezeitschlitzes, nicht mehr gewährleistet ist. Eine Folge eines solchen nicht mehr fehlerfreien Kommunikation ist zum Beispiel, dass die Produktionsmaschine automatisch angehalten wird.

Eine Aufgabe der Erfindung besteht entsprechend darin, ein Verfahren zur Synchronisation eines isochronen Basistaktsystems mit einem bisher unabhängigen, topologisch übergeordneten Taktsystem anzugeben, bei dem die oben skizzierten Nachteile vermieden werden oder zumindest deren Auswirkungen reduziert sind.

Diese Aufgabe wird erfindungsgemäß mittels eines Verfahrens zur Synchronisation eines isochronen Basistaktsystems mit einem bisher unabhängigen, topologisch übergeordneten Taktsystem mit den Merkmalen des Anspruchs 1 gelöst. Dazu ist bei einem solchen Verfahren, wobei das Basistaktsystem mehrere synchrone Komponenten mit jeweils einem Taktgenerator zur Generierung lokaler Takte umfasst, vorgesehen, dass in einem ersten Schritt der Synchronisation ein Phasenunterschied zwischen einer Istphase des Basistaktsystems und einer Sollphase des übergeordneten Taktsystems ermittelt wird und der Phasenunterschied an die Komponenten des Basistaktsystems übermittelt wird sowie dass in einem zweiten Schritt der Synchronisation der ermittelte Phasenunterschied als Vorsteuerung des Taktgenerators jeder Komponente verwendet wird. Die Vorsteuerung wird deaktiviert, sobald die Synchronizität des Basistaktsystems (10) mit dem übergeordneten Taktsystem (30) erreicht ist.

Als lokale Taktgeneratoren der Komponenten des Basistaktsystems kommen insbesondere DPLLs in Betracht, so dass die nachfolgende Beschreibung im Interesse einer besseren Lesbarkeit, aber ohne Verzicht auf eine weitergehende Allgemeingültigkeit, am Beispiel von DPLLs als lokalen Taktgeneratoren fortgesetzt wird.

Die hier vorgeschlagene Lösung setzt die mithilfe der jeweils lokalen DPLLs erreichte Synchronizität aller Takte der von dem Basistaktsystem umfassten Komponenten mit dem Kommunikationstakt des Taktmasters dieses Basistaktsystems voraus. Zunächst wird im Taktmaster aus dem KGV-Takt mit dafür geeigneten Mitteln, insbesondere einer geeigneten Hardware, eine Information erzeugt, welche sich dafür eignet, mit üblichen Kommunikationsmitteln zu den einzelnen Komponenten übertragen zu werden. Dafür wird die Genauigkeit dieser Information auf eine Auflösung von einem Kommunikationstakt reduziert. Alle übrigen Komponenten des Basistaktsystems können aus dieser Information und dem Kommunikationstakt den KGV-Takt des Taktmasters rekonstruieren. Die Konsistenzbedingung zum Taktmaster ist erfüllt, wenn alle Takte des eigenen Taktsystems die Konsistenzbedingung bezüglich des Kommunikationstakts und des rekonstruierten KGV-Takts erfüllen. Die Herstellung dieser Konsistenzbedingung erfolgt mittels Hardware, allerdings gesteuert durch eine entsprechende Software.

Die Anpassung des Basistaktsystems nach der Verbindung mit einem übergeordneten Taktsystem erfolgt im Gegensatz zu bisher in zwei voneinander unabhängigen Schritten:
In einem ersten Schritt werden zunächst alle Perioden des Basistaktsystems angepasst, d.h. ein jeweiliger Phasenunterschied zwischen dem Basistaktsystem und dem übergeordneten Taktsystem zum Zeitpunkt der Verbindung wird als Sollwert übernommen und ab sofort konstant gehalten. Dieser Schritt wird im Folgenden als "Einrasten" bezeichnet.

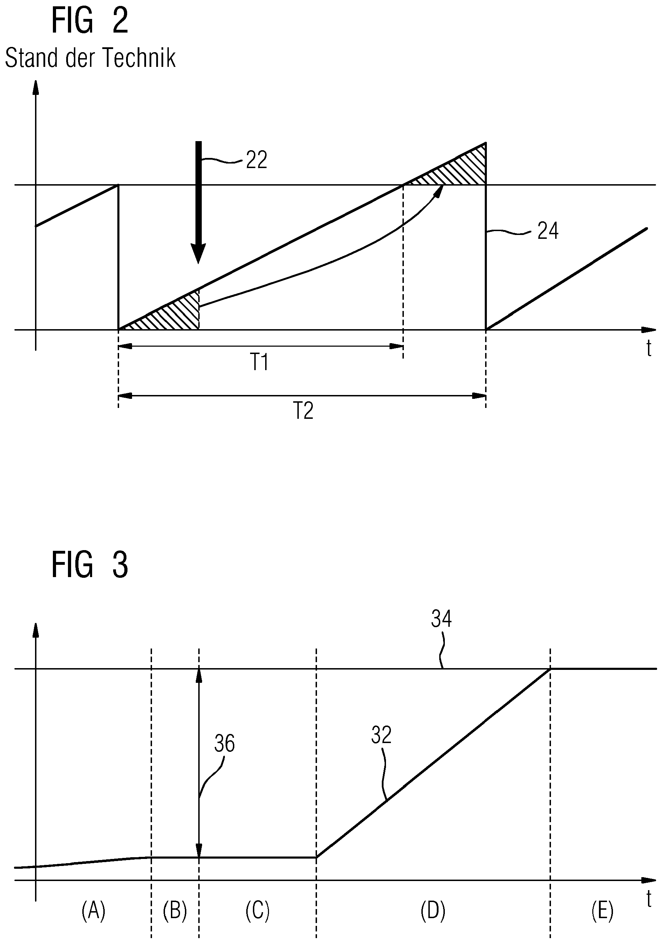

In einem zweiten Schritt wird mittels einer vorab berechneten, geplanten und deterministischen Phasenverschiebung (siehe FIG 3; Abschnitt B), d.h. einer zeitlich begrenzten und in allen Komponenten gleichzeitig durchgeführten Vorsteuerung mittels Sollwertaufschaltung, innerhalb des gesamten Basistaktsystems der anfängliche Phasenunterschied zum übergeordneten Taktsystem eliminiert. Dieser Schritt wird im Folgenden als "Hinziehen" bezeichnet.

Der im ersten Schritt ermittelte und während des Ablaufs des ersten Schritts konstant gehaltene Phasenunterschied ermöglicht es, den genauen Ablauf des zweiten Schritts im Voraus sowie optional unter Berücksichtigung zusätzlicher Randbedingungen, z.B. einer maximal zulässigen Verzugsgeschwindigkeit, Vorgaben zur Einhaltung des Sendezeitschlitzes, Limitierungen in der Hardware, etc., zu berechnen und das Ergebnis dieser Berechnung unter Verwendung üblicher Kommunikationsmittel allen Komponenten des Basistaktsystems mitzuteilen (siehe FIG 3; Abschnitt C).

Die Berechnung erfolgt mittels Software. Der Zeitraum für die Berechnung und die Verteilung an alle Komponenten des Basistaktsystems wird im Folgenden als "Vorbereiten" bezeichnet. Das "Hinziehen" (zweiter Schritt; siehe oben) ist nur erfolgreich, wenn dieses gleichzeitig für alle Takte in allen Komponenten des Basistaktsystems ausgeführt wird. Dies wird mittels einer synchronen Vorsteuerung der Taktsysteme der von dem Basistaktsystem umfassten Komponenten folgendermaßen gewährleistet (siehe FIG 3; Abschnitt D):
1. Die Vorsteuerung startet nur am Beginn eines KGV-Takts. Die Kommunikation der Komponenten wird um ein Kommunikationsmittel, zum Beispiel durch Einführung oder Erweiterung eines Prozessdatums, durch Erweiterung des Telegrammheaders, etc., erweitert, das es ermöglicht, den Startzeitpunkt des KGV-Takts redundant zu übertragen.
2. Die Phasenverschiebung wird von jeder DPLL als zeitlich begrenzte Vorsteuerung berücksichtigt. Der Regler der DPLL interpretiert demnach die Phasenverschiebung nicht als auszuregelnde Störung sondern als geplante Sollwertaufschaltung.

Der hier vorgeschlagene Ansatz geht davon aus, dass für das an das übergeordnete Taktsystem anzupassende Basistaktsystem zwei Takte ausgewählt werden, die das gesamte Basistaktsystem repräsentieren, nämlich der Kommunikationstakt und der KGV-Takt. Dies führt zu einer Minimierung der für die Synchronisation benötigten Information.

Die eingangs genannte Software-Routine, mittels derer die Synchronizität des oder jedes (lokalen) Takts einer jeden Komponente des Basistaktsystems mit dem Kommunikationstakt des Taktmasters überwacht wird, wird von der konkreten Durchführung der Synchronisation mit dem übergeordneten Taktsystem entlastet, ohne die Kontrolle über die Synchronizität in Bezug auf den Kommunikationstakt des Taktmasters zu verlieren. Die Software-Routine hat jederzeit Einfluss darauf, welche Takte wann mit dem Kommunikationstakt des Taktmasters synchronisiert werden. Der Zeitpunkt der Ausführung der Software-Routine muss aber keiner zeitlichen Randbedingung mehr genügen.

Die notwendige Kommunikation zwischen den Komponenten des Basistaktsystems wird auf ein Minimum reduziert: Für die Rekonstruktion des KGV-Takts des Taktmasters ist die Übertragung von lediglich 1 Bit nötig, das im Rahmen der ohnehin stattfindenden Kommunikation transportiert werden kann, zum Beispiel im Telegramheader oder einem Prozessdatum.

Die Anpassung an das übergeordnete Taktsystem erfolgt damit insgesamt als vollständig geplanter, deterministischer Vorgang. Auch auf den einzelnen Komponenten des Basistaktsystems ablaufende Applikationssoftware wird über den Beginn und das Ende der Sollwertaufschaltung informiert und kann entsprechend deren Effekte innerhalb der Applikation gegebenenfalls kompensieren. Dies ermöglicht und erleichtert nötigenfalls den Weiterbetrieb kritischer Anlagen während des gesamten Synchronisationsvorgangs.

Der Vorteil der Erfindung besteht in der in den einzelnen Komponenten des Basistaktsystems kontinuierlich weiterlaufenden Regelung aufgrund des jeweiligen lokalen Takts und dessen kontinuierlicher Synchronizität mit dem Kommunikationstakt des Taktmasters sowie darin, dass in den Komponenten des Basistaktsystems kein Wechsel des Synchronisationsverfahrens mehr nötig ist. Die bisherige, fehleranfällige Umschaltung zwischen PLL-Synchronisation und direkter Synchronisation entfällt. Die DPLL bleibt im Eingriff und wechselt nicht den Betriebszustand. Ebenso bleibt die Unterdrückung des Übertragungsjitters durch die DPLL während des gesamten Vorgangs gewährleistet.

Das gesamte Verfahren stützt sich auf abgesicherte und redundant durchgeführte Übertragungen. Der Ausfall einzelner Übertragungen kann im Gegensatz zum bisherigen Verfahren zu keinem Zeitpunkt zum Verlust der Synchronizität einer Komponente führen.

Die Erfindung ist vorteilhaft in Software implementiert. Insoweit ist die Erfindung auch ein Computerprogramm mit Programmcodeanweisungen die bei einer Ausführung mittels einer Verarbeitungseinheit in Form von oder nach Art eines Mikroprozessors eine Ausführung des hier und im Folgenden beschriebenen Verfahrens bewirken. Die Ausführung des Computerprogramms erfolgt auf derjenigen Komponente des Basistaktsystems, die in dem Basistaktsystem als Taktmaster fungiert. Soweit bei der Erläuterung des gegenständlichen Verfahrens und spezieller Ausführungsformen einer Ausführung einzelner Aktionen (ermitteln, übertragen, verwenden, etc.) beschrieben ist, erfolgt stets eine automatische Ausführung solcher Aktionen, zum Beispiel unter Kontrolle des Computerprogramms oder entsprechender Verarbeitungsfunktionalität der weiteren von dem Basistaktsystem umfassten Komponenten.

Die Erfindung ist schließlich auch ein Computerprogrammprodukt, zum Beispiel in Form eines digitalen Speichermediums, mit einem Computerprogramm mit Programmcodemitteln oder elektronisch auslesbaren Steuersignalen, die so mit einer Verarbeitungseinheit in Form von oder nach Art eines Mikroprozessors zusammenwirken können, dass ein Verfahren wie hier und im Folgenden beschrieben ausgeführt wird sowie eine Produktionsmaschine der eingangs genannten Art, wobei in einen Speicher zumindest einer von der Produktionsmaschine umfassten Komponente ein solches Computerprogramm geladen oder ladbar ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung einer im Folgenden als Basistaktsystem aufgefassten Produktionsmaschine,
- FIG 2: eine Darstellung zur Erläuterung einer Synchronisation lokaler Takte mit einem Systemtakt (KGV-Takt),
- FIG 3: eine schematisch vereinfachte Darstellung eines Ablaufs einer Synchronisation des Basistaktsystems mit einem übergeordneten Taktsystem gemäß dem hier vorgeschlagenen Verfahren,
- FIG 4: eine Darstellung des Basistaktsystems zusammen mit dem Ablauf des hier vorgeschlagenen Verfahrens, sowie
- FIG 5: zur Gegenüberstellung mit der Darstellung in FIG 4 einen bisherigen Ablauf einer Synchronisation eines Basistaktsystems mit einem übergeordneten Taktsystem.

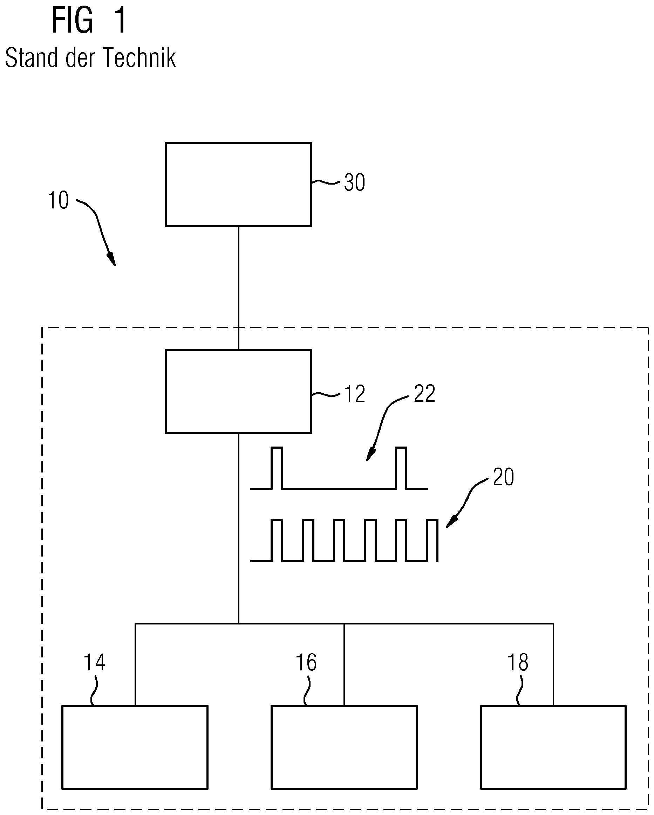

Die Darstellung in FIG 1 zeigt - schematisch stark vereinfacht - eine im Folgenden als Basistaktsystem 10 bezeichnete Vorrichtung mit einzelnen davon umfassten Komponenten 12, 14, 16, 18 wobei eine der Komponenten 12-18 als Taktmaster 12 in dem Basistaktsystem 10 fungiert und wobei alle Komponenten 12-18 miteinander, aber jeweils zumindest mit dem Taktmaster 12 in an sich bekannter Art und Weise kommunikativ verbunden sind. Bei der hier als Basistaktsystem 10 bezeichneten Vorrichtung handelt es sich zum Beispiel um eine Produktionsmaschine gemäß der eingangs vorangestellten Definition.

Zur Synchronisation aller vom Basistaktsystem 10 umfassten Komponenten 12-18 gibt der Taktmaster 12 einen Kommunikationstakt 20 sowie einen KGV-Takt 22 aus. Die Periode des Kommunikationstakts 20 gibt die Periode des kürzesten innerhalb des Basistaktsystems 10 durch die Komponenten 12-18 verwendbaren lokalen Takts vor. Diejenigen Komponenten 14-18, die vom Taktmaster 12 den Kommunikationstakt 20 erhalten, synchronisieren alle lokalen Takte mittels einer lokalen DPLL mit dem Kommunikationstakt 20. Der KGV-Takt 22 ist ein Systemtakt des Basistaktsystems 10, bei dem der Beginn jeder Taktperiode mit dem Beginn der Taktperioden aller anderen, untereinander synchronisierten Takte zusammenfällt.

Die Darstellung in FIG 2 zeigt über die Zeitachse t den Verlauf der Periodendauer eines lokalen Takts 24 einer der Komponenten 12-18 des Basistaktsystems 10 sowie die Synchronisation dieses lokalen Takts 24 mit dem vom Taktmaster 12 ausgegebenen KGV-Takt 22. Der Beginn der Periode des KGV-Takts 22 ist in der Darstellung in FIG 2 mit dem vertikalen, abwärts gewandten Pfeil verdeutlicht. Der Beginn der Periode des KGV-Takts 22 fällt mit dem Beginn der Periode des lokalen Takts 24 auseinander. Der lokale Takt 24 ist folglich nicht synchron mit dem KGV-Takt 22.

Um Synchronizität herzustellen wird die Periodendauer des lokalen Takts 24 verlängert. Dafür wird mittels eines Zählers, insbesondere eines Hardwarezählers (nicht gezeigt) in jeder Komponente 12-18 für jeden lokalen Takt 24 die Phasenlage des lokalen Takts 24 geprüft und gegebenenfalls eine Phasenverschiebung vorgenommen. Ein solcher Zähler wird mit Beginn der Periode des jeweiligen lokalen Takts 24 gestartet und mit dem Eintreffen des KGV-Takts 22 gestoppt. Der Zählerstand ist dann ein Maß für die Phasenlage des lokalen Takts 24 relativ zum KGV-Takt 22. Um Synchronizität des lokalen Takts 24 mit dem KGV-Takt 22 zu erreichen, wird die Periodendauer des lokalen Takts 24 entsprechend dem zuvor ermittelten Zählerstand verlängert.

Dies ist in der Darstellung in FIG 2 mittels des sich ab dem Beginn der Periode des lokalen Takts 24 bis zum Eintreffen des KGV-Takts 22 ergebenden Dreieck veranschaulicht. Zum Erhalt der Synchronizität des lokalen Takts 24 mit dem KGV-Takt 22 wird der lokale Takt 24 am Ende der mit T1 bezeichneten normalen Periodendauer um genau die Dauer dieses Dreiecks verlängert, so dass sich die mit T2 bezeichnete verlängerte Periodendauer ergibt. Nach dem Einschalten einer Periode mit einer solchen verlängerten Periodendauer T2 ist der lokale Takt 24 synchron mit dem KGV-Takt 22.

Die Darstellung in FIG 3 zeigt in schematisch vereinfachter Form den Ablauf des hier vorgeschlagenen Verfahrens. Dabei wird davon ausgegangen, dass ein isochrones Basistaktsystem 10 (FIG 1) mit einem bisher unabhängigen, topologisch übergeordneten Taktsystem 30 (FIG 1), bei dem es sich um eine weitere Produktionsmaschine oder eine übergeordnete Einrichtung handeln kann, synchronisiert werden soll.

Über der Zeitachse t ist dabei in FIG 3 der Phasenunterschied zwischen einer Istphase 32 des Basistaktsystem 10 und einer Sollphase 34 des übergeordneten Taktsystems 30 dargestellt. Zunächst (Abschnitt A) sind die beiden Systeme 10, 30 nicht synchron. Die Synchronisation umfasst einen ersten und einen zweiten Schritt und beginnt im Rahmen des ersten Schritts mit einer als "Einrasten" bezeichneten Phase (Abschnitt B). Am Ende dieser Phase wird ein Momentanwert des Phasenunterschieds 36 zwischen der Istphase 32 des Basistaktsystems 10 und der Sollphase 34 des übergeordneten Taktsystems 30 erfasst und als Sollwert für eine synchrone Vorsteuerung der Taktsysteme der von dem Basistaktsystem 10 umfassten Komponenten 12-18 übernommen. Der Zeitraum für eine Ermittlung des Sollwerts für die Vorsteuerung sowie für die Verteilung des Sollwerts an die Komponenten 12-18 des Basistaktsystems 10 ist in der Darstellung in FIG 3 als eine unmittelbar an das "Einrasten" anschließende Phase (Abschnitt C) gezeigt.

Die Vorsteuerung der Komponenten 12-18 des Basistaktsystems 10 startet am Beginn eines KGV-Takts 22, so dass die Dauer des Abschnitts C und der Beginn des anschließenden zweiten Schrittes der Synchronisation des Basistaktsystems 10 mit dem übergeordneten Taktsystem 30 vom nächsten Beginn der Periode des KGV-Takts 22 nach der Ermittlung des Sollwerts für die Vorsteuerung abhängt. Der zweite Schritt der Synchronisation besteht in einer als "Hinziehen" bezeichneten Phase (Abschnitt D). Während dieser Phase wirkt die Vorsteuerung, indem - in an sich bekannter Art und Weise - der zuvor ermittelte Phasenunterschied 36 dem Regelkreis der lokalen DPLLs der einzelnen Komponenten 12-18 des Basistaktsystems 10 zugeführt wird. Dazu zeigt die Darstellung in FIG 4 die Komponenten 12-18 des Basistaktsystems 10, denen vom Taktmaster 12 der ermittelte Phasenunterschied 36 zur synchronen Vorsteuerung zugeführt wird.

Im unteren Bereich der Darstellung in FIG 4 ist dazu ein Ausschnitt aus dem zeitlichen Verlauf der Synchronisation entsprechend der Darstellung in FIG 3 wiederholt. Gezeigt sind die Istphasen 32 der Komponenten 14-18 und die Sollphase 34. Die Istphasen 32 werden während des "Hinziehen" synchron an die Sollphase 34 angepasst. Die Synchronizität der Komponenten 12-18 des Basistaktsystems 10 bleibt demnach während der Synchronisation des Basistaktsystems mit dem übergeordneten Taktsystem 30 erhalten. Die einzelnen Komponenten 12-18 bleiben in Regelung und es ergibt sich zum Beispiel kein sogenannter Schleppabstand.

Im Vergleich dazu ist in der Darstellung in FIG 5 eine Situation gezeigt, wie sie sich bei einer bisherigen Synchronisation eines Basistaktsystems 10 mit einem übergeordneten Taktsystem 30 ergibt. Man erkennt, dass die Anpassung der Istphasen 32 der Komponenten 14-18 nicht synchron erfolgt. Dazu sind in der Darstellung die einzelnen während der Synchronisation mit dem übergeordneten Taktsystem 30 resultierenden Istphasen 32 der Komponenten 14-18 mit den in Klammern gesetzten Bezugsziffern der jeweiligen Komponente 14-18 bezeichnet. Die Komponenten 14-18 fallen also aus der Regelung und es ergibt sich in nachteiliger Art und Weise ein Schleppabstand.

Sobald eine Synchronizität mit dem übergeordneten Taktsystem 30 besteht, endet die Phase des "Hinziehens" und die Vorsteuerung wird deaktiviert. Die beiden Systeme 10,30 sind synchron (FIG 3: Abschnitt E).

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird ein Verfahren zur Synchronisation eines mehrere synchronisierte Komponenten 12-18 umfassenden Basistaktsystems 10 mit einem übergeordneten Taktsystem 30, wobei in einem ersten Schritt der Synchronisation ein Phasenunterschied 36 zwischen einer Istphase 32 des Basistaktsystems 10 und einer Sollphase 34 des übergeordneten Taktsystems 30 ermittelt wird und der Phasenunterschied 36 an die Komponenten 12-18 des Basistaktsystems 10 übermittelt wird und wobei in einem zweiten Schritt der Synchronisation der ermittelte Phasenunterschied 36 als Vorsteuerung jeder Komponente 12-18, nämlich zur Vorsteuerung eines Taktgenerators jeder Komponente 12-18, verwendet wird. Die Vorsteuerung wird deaktiviert, sobald die Synchronizität des Basistaktsystems (10) mit dem übergeordneten Taktsystem (30) erreicht ist.

## Patentansprüche

1. Verfahren zur Synchronisation eines isochronen Basistaktsystems (10) mit einem übergeordneten Taktsystem (30),
wobei das Basistaktsystem (10) mehrere synchrone Komponenten (12-18) mit jeweils einem Taktgenerator zur Generierung lokaler Takte umfasst,
wobei in einem ersten Schritt der Synchronisation ein Phasenunterschied (36) zwischen einer Istphase (32) des Basistaktsystems (10) und einer Sollphase (34) des übergeordneten Taktsystems (30) ermittelt wird und der Phasenunterschied (36) an die Komponenten (12-18) des Basistaktsystems (10) übermittelt wird,
wobei in einem zweiten Schritt der Synchronisation der ermittelte Phasenunterschied (36) als Vorsteuerung des Taktgenerators jeder Komponente (12-18) verwendet wird wobei die Vorsteuerung deaktiviert wird, sobald die Synchronizität des Basistaktsystems (10) mit dem übergeordneten Taktsystem (30) erreicht ist.

2. Verfahren nach Anspruch 1,
wobei eine in dem Basistaktsystem (10) als Taktmaster (12) fungierende Komponente (12) für die von dem Basistaktsystem (10) umfassten weiteren Komponenten (14-18) einen Kommunikationstakt (20) und einen KGV-Takt (22) generiert,
wobei alle von den Komponenten (12-18) verwendeten lokalen Takte (24) mit dem Kommunikationstakt (20) synchron sind und eine Periode des KGV-Takts (22) das kleinste gemeinsame Vielfache der Perioden aller anderen Takte (24) des Basistaktsystems (10) ist und
wobei der zweite Schritt der Synchronisation und die Vorsteuerung der Taktgeneratoren der Komponenten (12-18) des Basistaktsystems mit dem Beginn einer Periode des KGV-Takts (22) beginnt.

3. Verfahren nach Anspruch 1 oder 2,
wobei als lokale Taktgeneratoren der Komponenten (12-18) des Basistaktsystems (10) digitale PLLs verwendet werden.

4. Verfahren nach einem der vorhergehenden Ansprüche,
wobei zur Herstellung von Synchronizität die Periodendauer des lokalen Takts (24) verlängert wird, indem mittels eines Zählers in jeder Komponente (12-18) für jeden lokalen Takt (24) die Phasenlage des lokalen Takts (24) geprüft und gegebenenfalls eine Phasenverschiebung vorgenommen wird.

5. Verfahren nach Anspruch 4,
wobei der Zähler mit Beginn der Periode des jeweiligen lokalen Takts (24) gestartet und mit dem Eintreffen des KGV-Takts (22) gestoppt wird, wobei der Zählerstand ist dann ein Maß für die Phasenlage des lokalen Takts (24) relativ zum KGV-Takt (22) ist.

6. Verfahren nach Anspruch 5,
wobei zur Erreichung von Synchronizität des lokalen Takts (24) mit dem KGV-Takt (22) die Periodendauer des lokalen Takts 24 entsprechend dem zuvor ermittelten Zählerstand verlängert wird.

7. Isochrones Basistaktsystem (10), insbesondere Produktionsmaschine zur Durchführung eines Verfahrens nach einem der Ansprüche 1 bis 6.

8. Computerprogramm mit Programmcodemitteln, um alle Schritte von jedem beliebigen der Ansprüche 1 bis 6 durchzuführen, wenn das Computerprogramm auf Komponenten (12-18) des Basistaktsystems (10) ausgeführt wird.

9. Computerprogrammprodukt mit Programmcodemitteln, die auf einem computerlesbaren Datenträger gespeichert sind, um das Verfahren nach jedem beliebigen der Ansprüche 1 bis 6 durchzuführen, wenn das Computerprogrammprodukt auf Komponenten (12-18) des Basistaktsystems (10) ausgeführt wird.

10. Digitales Speichermedium mit elektronisch auslesbaren Steuersignalen, die so mit Verarbeitungseinheiten von Komponenten (12-18) des Basistaktsystems (10) zusammenwirken können, dass ein Verfahren nach einem der Ansprüche 1 bis 6 ausgeführt wird.

11. Produktionsmaschine mit einer als Taktmaster (12) fungierenden Komponente (12-18), die eine Verarbeitungseinheit und einem Speicher umfasst, wobei in den Speicher ein Computerprogramm nach Anspruch 8 geladen ist, das im Betrieb der Produktionsmaschine durch die Verarbeitungseinheit in der als Taktmaster (12) fungierenden Komponente (12-18) ausgeführt wird.

## Claims

1. Method for synchronising an isochronous basic clock pulse system (10) with a higher-ranking clock pulse system (30),
wherein the basic clock pulse system (10) comprises a plurality of synchronous components (12-18) each having a clock pulse generator for generating local clock pulses,
wherein in a first step of the synchronisation, a phase difference (36) between an actual phase (32) of the basic clock pulse system (10) and a nominal phase (34) of the higher-ranking clock pulse system (30) is determined and the phase difference (36) at the components (12-18) of the basic clock pulse system (10) is transmitted,
wherein in a second step of the synchronisation the phase difference (36) determined is used as a pilot control of the clock pulse generator of each component (12-18) wherein the pilot control is deactivated as soon as synchronicity of the basic clock pulse system (10) with the higher-ranking clock pulse system (30) is achieved.

2. Method according to claim 1,
wherein a component (12) functioning in the basic clock pulse system (10) as a master clock (12) for the further components (14-18) in the basic clock pulse system (10) generates a communication clock pulse (20) and an LCM clock pulse (22),
wherein all local clock pulses (24) used by the components (12-18) are synchronous with the communication clock pulse (20) and a period of the LCM clock pulse (22) is the lowest common multiple of the periods of all other clock pulses (24) of the basic clock pulse system (10) and
wherein the second step of the synchronisation and the pilot control of the clock pulse generators of the components (12-18) of the basic clock pulse system begins with the start of a period of the LCM clock pulse (22).

3. Method according to claim 1 or 2,
wherein digital PLLs are used as local clock pulse generators of the components (12-18) of the basic clock pulse system (10) .

4. Method according to one of the preceding claims,
wherein to establish synchronicity, the period of the local clock pulse (24) is prolonged, by checking by means of a counter in each component (12-18) for each local clock pulse (24) the phase position of the local clock pulse (24) and, if applicable, performing a phase shift.

5. Method according to claim 4,
wherein the counter is started on the start of the period of the respective local clock pulse (24) and stopped on the arrival of the LCM clock pulse (22), wherein the counter content is then a measure for the phase position of the local clock pulse (24) relative to the LCM clock pulse (22).

6. Method according to claim 5,
wherein to achieve synchronicity of the local clock pulse (24) with the LCM clock pulse (22), the period of the local clock pulse (24) is prolonged in accordance with the previously determined counter content.

7. Isochronous basic clock pulse system (10), in particular production machine, for carrying out a method according to one of claims 1 to 6.

8. Computer program with programming code means in order to carry out all steps of one of claims 1 to 6 when the computer program is executed on components (12-18) of the basic clock pulse system (10).

9. Computer program product with programming code means which is stored on a computer-readable data medium in order to carry out the method according to one of claims 1 to 6 when the computer program product is executed on components (12-18) of the basic clock pulse system (10).

10. Digital storage medium with electronically readable control signals, which are able to interact with processing units of components (12-18) of the basic clock pulse system (10) such that a method according to one of claims 1 to 6 is executed.

11. Production machine with a component (12-18) functioning as a master clock (12) comprising a processing unit and a memory, wherein a computer program according to claim 8 is loaded into the memory, which, during the operation of the production machine, is executed by the processing unit in the component (12-18) functioning as a master clock (12).

## Revendications

1. Procédé de synchronisation d'un système (10) d'horloge de base isochrone par un système (30) d'horloge supérieur hiérarchiquement,
dans lequel le système (10) d'horloge de base comprend plusieurs composants (12 à 18) synchrones ayant chacun un générateur d'horloge pour produire des horloges locales,
dans lequel, dans un premier stade de la synchronisation, on détermine une différence (36) de phase entre une phase (32) réelle du système (10) d'horloge de base et une phase (34 de consigne du système (30) d'horloge supérieur hiérarchiquement, et on transmet la différence (36) de phase aux composants (12 à 18) du système (10) d'horloge de base,
dans lequel, dans un deuxième stade de la synchronisation, on utilise la différence (36) de phase, qui a été déterminée, comme pilotage du générateur d'horloge de chaque composant (12 à 18),
dans lequel on désactive le pilotage, dès que la synchronicité du système (10) d'horloge de base avec le système (30) d'horloge supérieur hiérarchiquement est atteinte.

2. Procédé suivant la revendication 1,
dans lequel un composant (12), servant dans le système (10) d'horloge de base de maître (12) d'horloge pour les autres composants (14 à 18), embrassés par le système (10) d'horloge de base, produit une horloge (20) de communication et une horloge (22) KGV,
dans lequel toutes les horloges (24) locales utilisées par les composants (12 à 18) sont synchrones avec l'horloge (20) de communication et une période de l'horloge (22) KGV est le plus petit commun multiple des périodes de toutes les autres horloges (24) du système (10) d'horloge de base et
dans lequel le deuxième stade de la synchronisation et le pilotage des générateurs d'horloge des composants (12 à 18) du système d'horloge de base commence avec le début d'une période de l'horloge (22) KGV.

3. Procédé suivant la revendication 1 ou 2,
dans lequel on utilise des PLL numériques comme générateurs d'horloge locaux des composants (12 à 18) du système (10) d'horloge de base.

4. Procédé suivant l'une des revendications précédentes,
dans lequel, pour obtenir la synchronicité, on prolonge la période de l'horloge (24) locale en contrôlant, au moyen d'un compteur dans chaque composant (12 à 18), pour chaque horloge (24) locale, la position en phase de l'horloge (24) locale et en effectuant, le cas échéant, un déphasage.

5. Procédé suivant la revendication 4,
dans lequel on lance le compteur au début de la période de l'horloge (24) locale respective et on l'arrête avec l'arrivée de l'horloge (22) KGV, l'état du compteur étant alors une valeur de la position en phase de l'horloge (24) locale par rapport à l'horloge (22) KGV.

6. Procédé suivant la revendication 5,
dans lequel, pour atteindre la synchronicité de l'horloge (24) locale avec l'horloge (22) KGV, on prolonge la période de l'horloge (24) locale conformément à l'état du compteur déterminé auparavant.

7. Système (10) d'horloge de base isochrome, notamment machine de production pour effectuer un procédé suivant l'une des revendications 1 à 6.

8. Programme d'ordinateur ayant des moyens de code de programme pour effectuer tous les stades de chacune au choix des revendications 1 à 6, lorsque le programme d'ordinateur est réalisé sur des composants (12 à 18) du système (10) d'horloge de base.

9. Produit de programme d'ordinateur ayant des moyens de code de programme, qui sont mis en mémoire sur un support de données déchiffrables par ordinateur pour effectuer le procédé suivant chacune au choix des revendications 1 à 6, lorsque le produit de programme d'ordinateur est réalisé sur des composants (12 à 18) du système (10) d'horloge de base.

10. Support de mémoire numérique, comprenant des signaux de commande déchiffrables électroniquement, qui peuvent coopérer avec des unités de traitement de composants (12 à 18) du système (10) d'horloge de base de manière à effectuer un procédé suivant l'une des revendications 1 à 6.

11. Machine de production, comprenant un composant (12 à 18), qui sert de maître (12) d'horloge et qui comprend une unité de traitement et une mémoire, dans laquelle il est chargé dans la mémoire un programme d'ordinateur suivant la revendication 8, qui, lorsque la machine de production est en fonctionnement, est réalisé par l'unité de traitement dans le composant (12 à 18) servant d'horloge maître (12).
